**Europäisches Patentamt**

**European Patent Office**

**Office européen des brevets**

(11) Veröffentlichungsnummer: **0 098 807**
**A1**

## EUROPÄISCHE PATENTANMELDUNG

(21) Anmeldenummer: **83810300.0**

(22) Anmeldetag: **01.07.83**

(51) Int. Cl.³: **G 03 B 27/32**

(30) Priorität: 07.07.82 GB 8219625
06.08.82 GB 8222736
14.01.83 GB 8300990

(43) Veröffentlichungstag der Anmeldung: **18.01.84**
**Patentblatt 84/3**

(84) Benannte Vertragsstaaten: **BE CH DE FR GB IT LI**

(71) Anmelder: **CIBA-GEIGY AG, Patentabteilung Postfach, CH-4002 Basel (CH)**

(72) Erfinder: **Turner, George F. A. M., Monks Acres Woolmongers Lane Blackmore, Ingatestone Essex CM4 0JX (GB)**

(54) **Vergrösserungsgerät.**

(57) Ein Vergrösserungsgerät weist ein Bildfokussierbild (2) und ein dieses umschliessendes Gehäuse (1, 6) auf, sowie auf diesem einen entfernbaren Vorlagenhalter (9) mit einer Vorlagenöffnung (11) und einer Vergrösserungslinse (30) konstanter Brennweite, die in einem bestimmten Abstand unterhalb der Vorlage angebracht ist. Zum Vergrösserungsgerät gehört ein Verlängerungsstück (20), welches zwischen dem oberen Ende des Gehäuses und dem entfernbaren Vorlagenhalter einschiebbar ist und welches in eingeschobener Stellung den Abstand zwischen dem Bildfokussierfeld und der Vergrösserungslinse um einen bestimmten Betrag verringert. Weiter sind Mittel vorgesehen, die gestatten, die an sich konstante Brennweite der Vergrösserungslinse um einen bestimmten Betrag zu verkleinern, oder um den Abstand zwischen der Vergrösserungslinse (30) und der Vorlagenöffnung (11) um einen bestimmten Betrag zu verringern, so dass in jedem Falle, wenn das Verlängerungsstück sich im Vergrösserungsgerät befindet, ein gewünschtes Teilgebiet der Vorlage auf das Bildfokussierfeld fokussiert werden kann, um eine Abbildung des Teilgebiets der Vorlage zu erzeugen, die von gleicher Grösse ist wie das ohne Verwendung des Verlängerungsstücks erhaltene Bild der gesamten Vorlage.

In einer ersten Ausführungsform wird eine Zerstreuungslinse verwendet, um die Brennweite der Vergrösserungslinse zu verkürzen. In einer anderen Ausführungsform wird die Vergrösserungslinse in einer Querwand (36) gelagert, deren Abstand von der Vorlagenöffnung (11) geändert werden kann.

0098807

CIBA-GEIGY AG
Basel (Schweiz)

87-13999/14045+

## Vergrößerungsgerät.

Die Erfindung betrifft photographische Vergrößerungsgeräte, in welchen eine Vergrößerungslinse von konstanter Brennweite verwendet wird, und insbesondere solche der im Oberbegriff des Patentanspruch 1 beschriebenen Art.
Photographische Vergrößerungsgeräte sind verhältnismäßig teure Einrichtungen für den, der seine eigenen Negative kopieren möchte, aber auch für Schulen, in denen eine Anzahl von Vergrößerungsgeräten zur Benutzung in einer Schulklasse erforderlich sind. Einer der in der Herstellung besonders teuren Teile eines üblichen Vergrößerungsgeräts ist der zur Einstellung der Brennweite der Vergrößerungslinse erforderliche Mechanismus, der es gestattet, verschiedene Vergrößerungen eines Feldbereiches eines zu kopierenden Negativs vorzunehmen. Jedoch ist es für einen Anfänger auf dem photographischen Gebiet oder für eine Schule vielleicht noch wichtiger, ein billiges Vergrößerungsgerät anzuschaffen, durch dessen Verwendung Normalvergrößerungen ausgehend von einem normalen Negativ hergestellt werden können, als ein teueres Vergrößerungsgerät mit bedeutend mehr anderweitigen Anwendungsmöglichkeiten, deren Anwendung jedoch unwahrscheinlich ist.

Daher befinden sich auf dem Markt eine Anzahl Vergrößerer mit konstanter Brennweite, um die Nachfrage nach solchen billigen Vergrößerungsgeräten zu befriedigen. Üblicherweise bestehen diese Vergrößerungsgeräte aus einem lichtdichten Rahmen oder kastenartigen Gehäuse, durch dessen Inneres sich der bilderzeugende Strahlengang erstreckt. Auf dem Gehäuse ist ein Vorlagenträger mit einer darunter befindlichen Vergrößerungslinse angebracht, und auf dem Vorlagenträger ist das Lampenhaus montiert. In einer solchen Anordnung ist der Abstand der Linse von der Bildprojektionsebene konstant. Die optische Charakteristik der Linse ist
oft so gewählt, daß bei Anwesenheit einer Standard-35 mm-
Bildvorlage (Negativ) im Vorlagenträger die Größe des auf
die Projektionsebene projizierten Bildes eine Standardgröße,
d.h. 8,5 mm x 12,7 mm beträgt.

Es besteht jedoch ein Bedürfnis, die Verwendungsmöglichkeiten eines solchen einfachen Vergrößerungsgeräts ohne wesentliche Kostensteigerung zu erweitern.

Dies wird gemäß der Erfindung durch ein Vergrößerungsgerät
der eingangs beschriebenen Art erreicht, das die im kennzeichnenden Teil des Patentanspruchs 1 aufgeführten Merkmale aufweist. Die Merkmale bevorzugter Ausführungsformen
des erfindungsgemäßen Vergrößerungsgeräts sind in den Unteransprüchen beschrieben.

Wie in jedem anderen Vergrößerungsgerät hängt auch bei demjenigen nach der Erfindung die Größe des auf die Abbildungsebene projizierten Bildes von der Gleichung

$$v = \frac{u \times F}{u - F}$$

ab, in welcher u den Abstand zwischen der Vorlage und der
Vergrößerungslinse, v den Abstand zwischen der Vergrößerungslinse und der Bildprojektionsebene und F die Brennweite der
Vergrößerungslinse bedeutet.

Beim Vergrößerungsgerät nach der Erfindung wird der Abstand
u zwischen Vorlage und Vergrößerungslinse so gewählt, daß
in einer vorher eingestellten Position der Vergrößerungslinse eine Vorlage bestimmter Größe ein projiziertes Bild
erzeugt, welches ein durch einen Rahmen abgegrenztes Fokussierfeld gerade ausfüllt.

Üblicherweise ist die Vorlage z.B. ein 35 mm-Negativfilm, die Fläche des zu vergrößernden Bildbereichs der Vorlage beträgt etwa 2,125 cm x 3,175 cm, und die Größe des projizierten Bildes etwa 8,5 cm x 12,7 cm (vierfache Vergrößerung).

Es ist der Zweck der Einfügung eines Verlängerungsorgans für das Gehäuse des Vergrößerungsgeräts in allen Ausführungsformen nach der Erfindung, zu erreichen, daß ein gewünschtes Teilgebiet der Vorlage vergrößert wird. Dies wird erreicht durch eine Erhöhung des Abstandes v zwischen der Vergrößerungslinse und dem Bildfokussierungsfeld, begleitet entweder von einer Verringerung des Abstandes u zwischen der Vergrößerungslinse und der Lichtdurchlaßöffnung unter der Vorlage oder von einer Vergrösserung der Brennweite des optischen Vergrößerungssystems, geradeso, wie es die obige Gleichung verlangt.

Die beigefügte Zeichnung dient zur Veranschaulichung der Erfindung. In ihr zeigen

Fig. 1  eine auseinandergezogene perspektivische Ansicht der Teile einer ersten Ausführungsform des Vergrößerungsgeräts nach der Erfindung,

Fig. 2  eine seitliche Schnittansicht des aufrechtgestellten Vergrößerungsgeräts nach Fig. 1 mit einem Fokussierspiegel in offener Stellung,

Fig. 3  die gleiche Ansicht wie Fig. 2, aber mit eingepaßtem Verlängerungsstrück,

Figuren 4 und 5 Schnittansichten von anderen Ausführungsformen des Vorlagenträgers im in den Figuren 1 und 2 gezeigten Vergrößerungsgerät,

Fig. 6 eine teilweise aufgeschnittene Seitenansicht einer
weiteren Ausführungsform des Vergrößerungsgeräts
nach der Erfindung,

Fig. 7 eine teilweise aufgeschnittene Seitenansicht einer
dritten Ausführungsform des Vergrößerungsgerät
nach der Erfindung, mit einem in das Gerät eingesetzten, eine Zerstreuungslinse enthaltenden Verlängerungsstück, und

Seitenanischt einer
Fig. 8 eine teilweise aufgeschnittene/vierten Ausführungsform ähnlich derjenigen nach Fig. 7, aber mit einer
anderen Anordnung der Zerstreuungslinse.

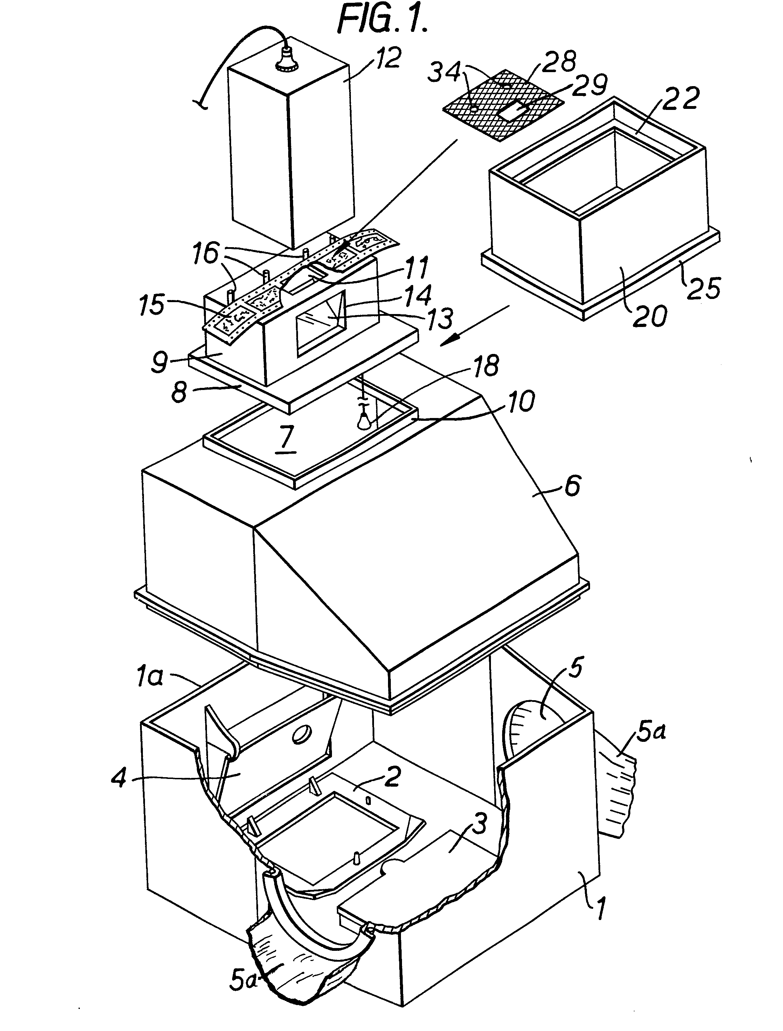

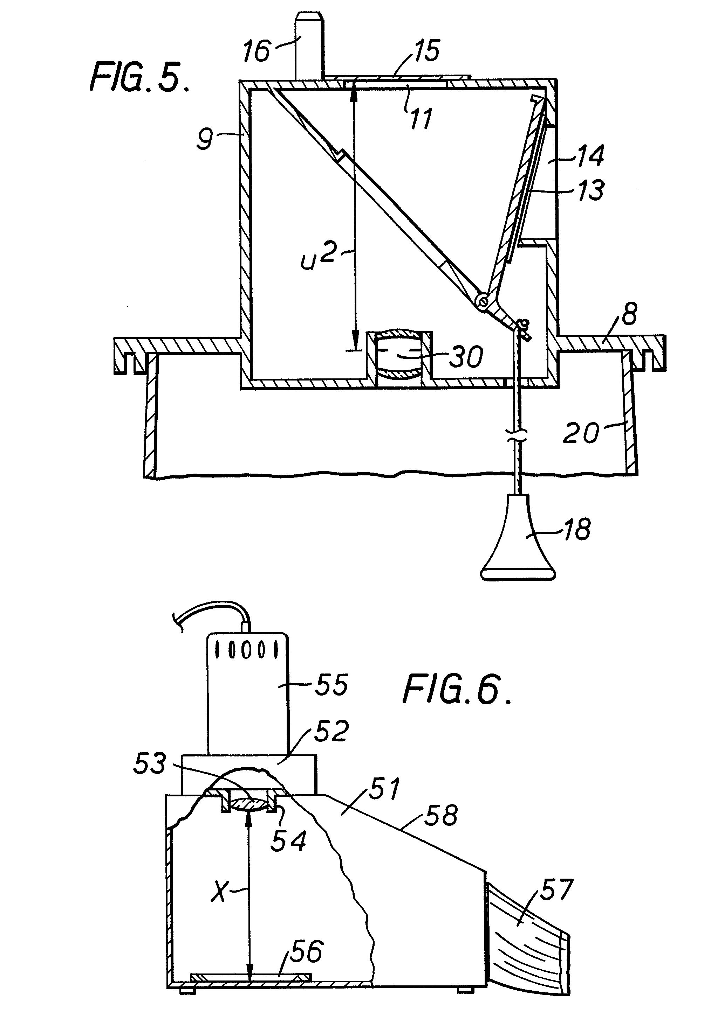

In den Figuren 1 bis 5 bezeichnen gleiche Bezugsziffern
gleiche Teile, und dies gilt andererseits auch für die Bezugsziffern, die in den Figuren 6 bis 8 vorkommen.

Das in Fig. 1 gezeigte Vergrößerungsgerät umfaßt eine
lichtundurchlässige, kastenförmige untere Gehäusehälfte 1,
auf deren Bodenfläche im Kasteninneren ein abhebbarer
Rahmen 2 und eine lichtdicht abschließbare Papierkassette 3
angebracht sind.

In den beiden Öffnungen 5 in den      . Seitenwänden des
Kastens 1 ist jeweils ein durch einen lichtausschließenden
gefalteten Ärmel gebildetes Armloch 5a ausgebildet. Auf der
Rückwand 1a ist eine Öffnung 4 vorhanden, mit der eine
äußere Behandlungswanne (nicht gezeigt) verbunden werden
kann, und durch die belichtetes Material in lichtdichter
Weise in die Behandlungswanne überführt werden kann.

Über der unteren Gehäusehälfte 1 ist als obere Gehäusehälfte ein Kastendeckel 6 aus rot gefärbtem Polystyrol
vorhanden. Der Deckel 6 paßt lichtdicht auf den Kasten 1.
Die untere Gehäusehälfte 1 und der obere Deckelteil 6
bilden zusammen das Gehäuse des Vergrößerungsgeräts.

Im obersten flachen Teil des Deckels 6 befindet sich eine
Öffnung 7, auf die ein an einem entfernbaren Vorlagenträger 9 vorgesehener umlaufender Flansch 8 sie überdeckend
paßt.

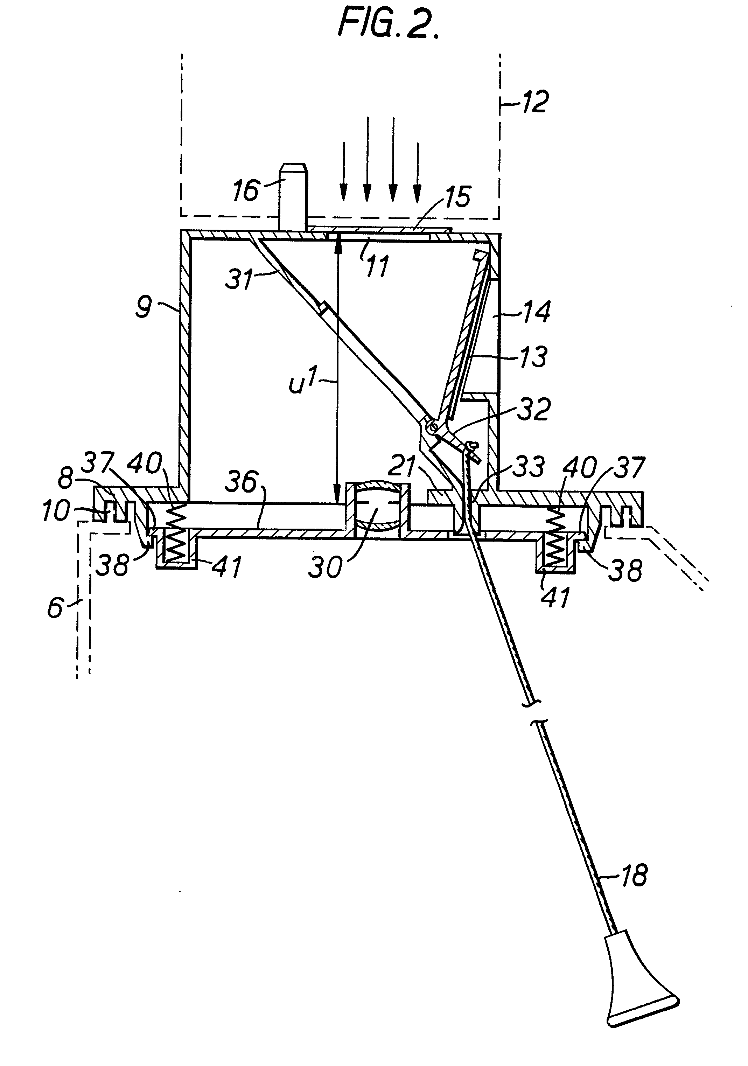

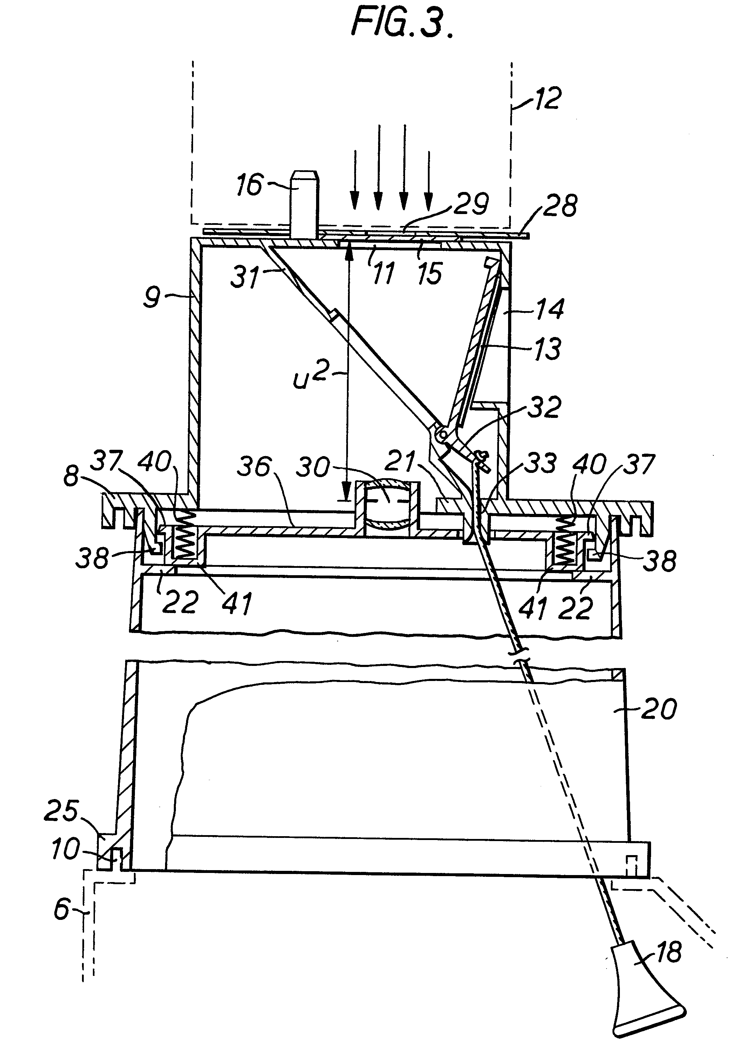

In der Oberseite des Vorlagenträgers 9 befindet sich eine
Lichteinlaßöffnung 11, durch welche hindurch aus dem entfernbaren Lampenhalter 12 stammendes Licht nach dem Passieren durch die Vorlage in das Gehäuseinnere gerichtet wird.
Unter der Lichteinlaßöffnung 11 befindet sich ein schräg
einstellbarer Spiegel 13, der in Fig. 1, durch eine Ausfallöffnung 14 in der Seitenwand des Vorlagenhalters 9
sichtbar, in geneigter Stellung gezeigt ist. Auf der Oberseite des Vorlagenträgers 9 ist ein Streifen 15 eines 35
mm-Negativfilms gezeigt (und zwar teilweise weggeschnitten,
um die darunter liegende Lichteinlaßöffnung 11 sichtbar
werden zu lassen). Von der Seite des Benutzers her gesehen
befindet sich hinter dem Film eine Reihe Anlagezapfen 16,
an denen die Filmkante anliegt. Vom Vorlagenträger 9 hängt
eine Zugleine 18 herab, mittels deren der Spiegel 13 aus
dem Lichtstrahlengang (wie in Fig. 2 und 3 gezeigt) herausgeschwenkt werden kann. Rechts oben ist neben dem Vergrößerungsgerät ein hohles, oben und unten offenes Verlängerungsstück 20 von rechteckigem Querschnitt mit einem an den Innenwänden umlaufenden Flansch 22 gezeigt. Auf dem Verlängerungsstück ist außen die durch seine Verwendung erforderlich werdende erhöhte Belichtungszeit angebracht. An seiner Unterseite besitzt der Flansch 8 des Vorlagenträgers 9
in Figuren 2 und 3 gezeigte Mittel, mit denen er auf eine
entsprechende, aus der Oberseite des Deckels nach oben vorspringende, die Öffnung 7 als Viereck umgebende Randleiste
10 mit Paßsitz aufgesetzt werden kann.

Der am unteren Ende des Verlängerungsstücks 20 umlaufende
Bodenflansch 25 paßt auf den auf der Oberseite des Deckelteils 6 vorgesehenen,nach aufwärts herausragenden Rahmen 10
(siehe Fig. 3),und der Flansch 8 des Vorlagenträgers 9 paßt auf das obere Ende des Verlängerungsstückes 20 (siehe Fig. 3). Neben dem Verlängerungsstück 20 ist in Fig. 1 auch noch eine Maske 28 aus einem Filmmaterial von pigmentiertem Kunststoff gezeigt, die lichtdurchscheinend ist. In der Mitte der Maske bleibt ein rechteckiges Feld 29 frei, welches den bei Verwendung des Verlängerungsstückes 20 zu vergrößernden Teilbereich der Vorlage abgrenzt.

Wie weiter aus Figuren 2 und 3 ersichtlich ist, befindet sich im Boden des Vorlagenträgers 9 eine in einer Querwand 36 befestigte Vergrößerungslinse 30.

Die Ränder der Querwand 36 ruhen auf am Vorlagenträger 9 befestigten Auflagegliedern 38. Die Querwand 36 ist dabei mittels in Ausnehmungen 41 derselben untergebrachter Federn 40 in ihre unterste Position federbelastet. Auf einem Auflagerahmen 31 im Inneren des Vorlagenträgers liegt der schwenkbare Spiegel 13 in seiner in das Innere des Vorlagenträgers 9 geklappten, nur in Fig. 1 gezeigten Schrägstellung auf. Die Zugleine 18 ist am freien Ende eines mit dem Spiegel 13 fest verbundenen, z.B. durch eine Feder (nicht gezeigt) in die Schrägstellung belasteten Schwenkhebels 32 befestigt und ist durch eine Öffnung 33 im Boden des Vorlagenträgers 9 hindurchgeführt.

Durch Abwärtsziehen an der Zugleine 18 ist der Spiegel, wie in Figuren 2 und 3 gezeigt, aus dem Pfad des vom Lampenhaus 12 her kommenden Lichtes herausgeklappt, so daß dieses Licht nun durch die Linse 30 fällt und ein vergrößertes Bild der Vorlage in dem durch den Rahmen 2 eingegrenzten Projektionsfeld erzeugt.

Fig. 3 zeigt das Verlängerungsstück 20, das zwischen dem Deckelteil 6 und dem Vorlagenträger 9 eingefügt ist. Auf dem Vorlagenträger 9 liegt die Maske 28, die so auf die Zapfen 16 aufgepaßt ist, daß Licht aus dem gestrichelt angedeuteten Lampenhaus 12 durch die Öffnung 29 der Maske auf die Vorlage 15 fallen kann.

Wenn das Verlängerungsstück 20 in das Gerät eingefügt ist,
so drückt der innen umlaufende Flansch 22 die Querwand 36
nach oben, so daß die Querwandränder 37 nicht mehr auf den
einwärts gewinkelten Anschlaggliedern 38 ruhen. Der ursprüngliche Abstand $u^1$ (Fig. 2) zwischen der Linse 30 und
der Lichtdurchlaßöffnung 15 ist nun auf den Abstand $u^2$
verkürzt worden. Auch ist der Abstand v zwischen der Linse
und dem durch den Rahmen 2 begrenzten Bildprojektionsfeld 2
durch die Zwischenschaltung des Verlängerungsstücks 20
zwischen das obere Ende des Deckelteils 6 und den Vorlagenhalter 9 verlängert (v ist in Figuren 2 und 3 nicht angedeutet).

In diesen Figuren 2 und 3 ist auch die Zugleine 18 in gezogener Stellung gezeigt, so daß der Spiegel 13 sich nicht
in seiner Schrägstellung befindet und Licht aus dem Lampenhaus 12 durch die Maske 28 und die Vorlage 15 hindurch in
die Linse 30 gelangen kann, durch die es auf das vom Rahmen 2 eingerahmte Feld am Boden des Vergrößerungsgeräts
fokussiert wird. In diesem Falle ist das im eingerahmten
Feld fokussierte Bild eine vergrößerte Abbildung desjenigen Teils der Vorlage, der unter dem unbedeckten rechteckigen Fenster 29 in der Maske 28 liegt.

Wäre der Spiegel 13 in Fig. 3 in der Schrägstellung, wie
sie in Fig. 1 gezeigt ist, so würde der Benutzer in der
Mitte des Spiegels 13 ein deutliches Bild desjenigen Teils
der Vorlage erblicken, über welchem sich das Fenster 29
erstreckt. Dieses Teilbild wird dann auf das eingerahmte
Bildfeld in Fig. 3 projiziert. Der Benutzer kann also
diesen zu vergrößernden Teilbereich der Vorlage nach
Wunsch einstellen, wenn die Lampe eingeschaltet ist und
der Spiegel 13 sich in Schrägstellung befindet.

Wie in Figuren 2 und 3 gezeigt, ist die Vergrößerungslinse
30 vorzugsweise in eine axial verschiebbare Querwand 36
eingebaut, wobei diese Querwand bevorzugt durch Federn 40 in ihre niedrigste Stellung am unteren Ende des Vorlagenträgers 9 belastet ist und diese einnimmt, wenn das Verlängerungsstück 20 aus dem Vergrößerungsgerät entfernt wird.

Verlängerungsstücke 20 verschiedener Längen können vorgesehen sein, um Vergrößerungen verschiedener Größe zu erzielen. Diese Verlängerungsstücke können mit innen umlaufenden Flanschen 22 versehen sein, die so in den betreffenden Verlängerungsstücken angebracht sind, daß die Vergrößerungslinse 30 entsprechend angehoben wird, um den jeweils erwünschten Abstand $u^2$ zu erzielen.

Bei einer in den Figuren 1 bis 3 gezeigten Ausführungsform des Vergrößerungsgeräts nach der Erfindung ist dieses für die Einbringung von 35 mm-Negativen in den Vorlagenträger und für die Projektion des gesamten Bildfeldes dieses Negativs (3,0 cm x 2,0 cm) auf ein Feld von 12 cm x 8 cm (Standardgröße) innerhalb des Rahmens 2 ausgelegt. Dies erfordert eine Distanz von 25 cm zwischen der Linse 30 und dem Feld im Rahmen 2 ($v^1$). Die Brennweite F der verwendeten Linse 30 beträgt 5 cm.

Das Verlängerungsstück 20 ist dabei z.B. so ausgelegt, daß ein Teilbereich des Negativs, der 1.5 cm lang und 1 cm breit ist, so auf das Bildfeld im Rahmen 2 ($v^2$) projiziert wird, daß ebenfalls eine Standard-Kopie der vorgenannten Vergrößerung von 12 cm x 8 cm erhalten wird. Dies erfordert aber einen Abstand der Linse 30 vom Rahmen 2, der auf insgesamt 45 cm verlängert ist, wobei der Abstand $u^1$, der (in Fig. 2) 6.25 cm beträgt, auf den Abstand $u^2$ von nur 5.62 cm verringert wird. Die bei Verwendung des Verlängerungsstücks 20 erforderliche Belichtungszeit, um eine Kopie gleicher Bilddichte von dem gleichen Negativ zu erhalten, ist länger als diejenige, die ohne Verlängerungsstück 20 erforderlich ist.

Das in den Figuren 1-3 gezeigte Vergrößerungsgerät kann bei vollem Tageslicht benutzt werden. Dabei ist in der Kassette 3 ein Stapel Kopiermaterial eingelegt und von außen her vor der Öffnung 4 eine tageslichtdichte Behandlungswanne befestigt, so daß ein Bogen belichteten Kopiermaterials durch die Öffnung 4 in die Behandlungswanne eingeführt werden kann.

Ein Streifen von 35 mm-Film 15 wird in den Vorlagenträger 9 gelegt und die Lampe im Lampenhaus 12 eingeschaltet. Ein reelles Bild der Vorlage, das vom schräggestellten Spiegel 13 reflektiert wird, wird nun vom Benutzer erblickt. Nachdem der Benutzer die Lage der Bildvorlage nach Wunsch korrigiert hat, legt er in den Rahmen 2 ein unbelichtetes Blatt Kopiermaterial aus der Kassette 3 ein, wobei er die Armlöcher 5a benutzt.

Mit seinen Armen immer noch in den Armlöchern 5a zieht er nun die Zugleine 18 während der von ihm bestimmten korrekten Belichtungszeit. Dann läßt er die Zugleine 18 los und führt die belichtete Kopie durch die Öffnung 4 in die lichtdichte Behandlungswanne ein. Das Kopiermaterial wird dann behandelt, und es kommt oft vor, daß noch eine oder zwei weitere Belichtungen erforderlich sind, um eine korrekt belichtete und behandelte Kopie zu erzeugen. Wenn die Vorlage einen beliebigen Bildteilbereich enthält, dessen weitere Vergrößerung erwünscht ist, so werden das Lampenhaus 12 und der Vorlagenträger 9 vom Gehäusedeckelteil 6 abgehoben und das Verlängerungsstück 20 auf den Deckel aufgesetzt, und der Vorlagenträger dann seinerseits auf das Verlängerungsstück aufgesetzt.

Die Maske 28 wird dann auf die Vorlage 15 gelegt und durch die Zapfen 16, welche durch Löcher 34 in der Maske hindurchragen, festgehalten. Das Lampenhaus 12 wird dann auf den Vorlagenträger 9 aufgesetzt. Nunmehr wird die Lampe eingeschaltet, und die Vorlage 15 kann unter der Maske 28 verschoben werden, bis der gewünschte zu vergrößernde Teilbe-

- 10 -

reich sich genau in Position unter dem rechteckigen
Fenster 29 der Maske 28 befindet.

Dieser genau eingestellte Bereich der Vorlage 15 kann
durch den Benutzer im schräggestellten Spiegel 13 erblickt
werden. Ein unbelichtetes Blatt Kopiermaterial wird dann
aus der Kassette 3 herausgenommen und in den Rahmen 2 gelegt. Der Benutzer zieht dann die Zugleine 18 solange bis
die zur korrekten Belicht erforderliche Zeit verstrichen
ist, die entsprechend länger dauert als die bei nicht im
Vergrößerer eingebautem Verlängerungsstück 20 erforderliche Belichtungszeit. Der belichtete Bogen wird dann
durch die Öffnung 4 in die Behandlungswanne eingebracht
und weiter verarbeitet, um eine Kopie zu erhalten, die
den gewählten Bildteilbereich der Vorlage 15 mit gegenüber
der ursprünglichen Vorlage achtfacher Vergrößerung zeigt.

Wie eben bemerkt, ist bei Verwendung eines Verlängerungsstücks 20 zur Belichtung einer Vorlage eine längere Belichtungszeit erforderlich, wenn eine Kopie der gleichen Bilddichte verlangt wird, wie sie von der gleichen Vorlage
ohne Verwendung des Verlängerungsstücks erhalten wird. Ist
z.B. die lineare Länge des von der Vorlage unter Verwendung
einer besonderen Verlängerung kopierten Bildteilbereichs
der Vorlage gleich der halben Länge des linearen Feldes
der Gesamtvorlage, das ohne Verwendung eines Verlängerungsstücks kopiert wird, dann ist die erforderliche Belichtungszeit viermal größer als die ohne Verlängerungsstück erforderliche. Vorzugsweise wird daher die verlängerte Belichtungszeit, die bei Verwendung eines Verlängerungsstücks erforderlich ist, auf diesem deutlich sichtbar vermerkt.

In der in den Figuren 1 bis 3 gezeigten Ausführungsform
der Erfindung ist das Vergrößerungsgerät ein Gerät vom
Hellraumtyp, das bei Tageslicht verwendet werden kann. Daher besteht die gesamte Umhüllung des bilderzeugenden
Strahlenganges aus einem Gehäuse, welches in seinem unteren Abschnitt lichtundurchlässige Wände besitzt, während
der obere Gehäuseabschnitt Wände aufweist, die für denjenigen Teil des sichtbaren Spektrums undurchlässig sind,
gegenüber welchem das zu belichtende lichtempfindliche
Material empfindlich ist. Wenn zumindest ein Teil der Umhüllung aus einem Material besteht, welches partial lichtdurchlässig ist, aber für Licht, für welches das lichtempfindliche Material empfindlich ist, undurchlässig ist,
so kann das projizierte Bild in diesem Gehäuseteil erblickt werden. Hierzu kann im Gehäuse ein verdunkelbares
Fenster vorgesehen sein, durch welches hindurch das Bild
betrachtet werden kann. In einem solchen Vergrößerungsgerät sind lichtdichte Armlöcher vorgesehen, die es einem
Benutzer ermöglichen, lichtempfindliches Material in das
eingerahmte Bildprojektionsfeld hineinzulegen und es nach
der Belichtung aus diesem Feld wieder zu entfernen und in
eine im Gehäuseinneren vorhandene Behandlungswanne oder in
einen darin vorhandenen Behälter einzubringen.

In einigen solchen Gehäusen ist es jedoch schwierig, das
projizierte Bild zu sehen, weshalb im Vergrößerungsgerät
nach der vorliegenden Erfindung im Vorlagenträger ein beweglicher, schrägstellbarer Spiegel vorgesehen ist, der in
einer ersten Stellung bei im Betrieb befindlichem Lampenhaus und einer Vorlage auf dem Vorlagenträger ein aufrechtes Bild der Vorlage aus dem Vergrößerungsgerät hinaus
reflektiert, so daß es von einem Benutzer des Vergrößerungsgeräts betrachtet werden kann, der aber in einer
zweiten Stellung aus seiner Lage unterhalb der Vorlage
herausbewegt werden kann, wodurch das Bild der beleuchteten Vorlage im Bildprojektionsfeld erzeugt werden kann.
Dies ist in Figuren 1 bis 3 dargestellt.

Sogar bei Tageslicht kann ein lichtstarkes, klares aufrechtes Bild der Vorlage in dem schräggestellten Spiegel
erblickt werden. Dieses Bild ist genau dasselbe, das abwärts auf die Bildprojektionsebene projiziert wird, wenn sich kein Spiegel im Strahlengang befindet. Hierdurch ist es möglich, die Position der Vorlage auf dem Vorlagenträger genau einzustellen.

Wie in Fig. 1 gezeigt, kann eine Maske 28 für das Projektionsfeld vorhanden sein, welche auf die auf dem Vorlagenträger liegende Vorlage gelegt werden kann. Diese Maske begrenzt denjenigen Bereich der Vorlage, der bei Verwendung eines bestimmten Verlängerungsstücks vergrößert im Bildprojektionsfeld erzeugt wird. Vorzugsweise weist diese Maske einerseits in ihrer Mitte einen vollständig lichtdurchlässigen Bereich auf, welcher dem zu vergrößernde Bereich entspricht, und besitzt andererseits einen lichtundurchlässigen oder halbdurchlässigen Rand, welcher dasjenige Gebiet der Vorlage überdeckt, das nicht vergrößert werden soll.

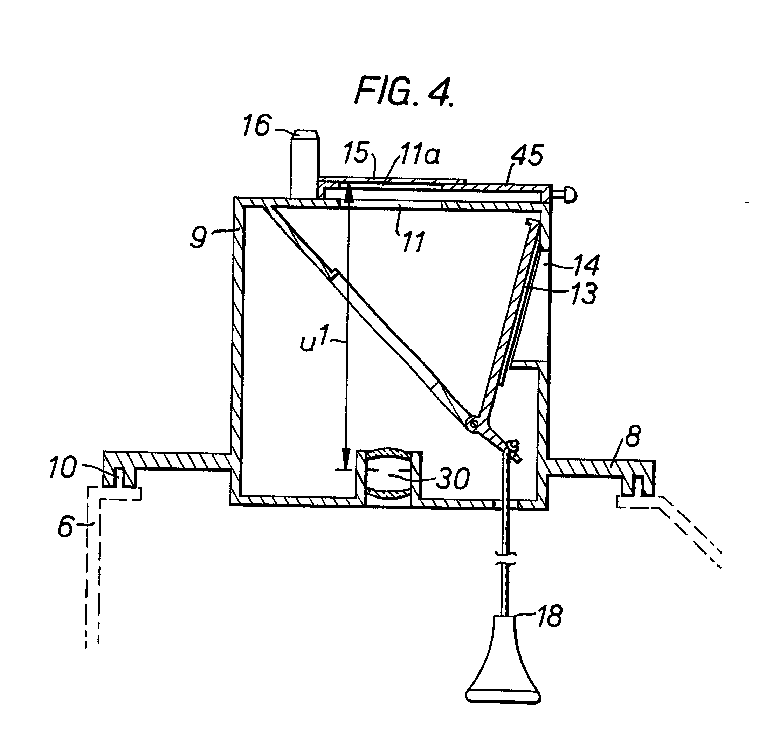

In der in den Figuren 4 und 5 gezeigten Ausführungsform des Vergrößerungsgeräts umfaßt der Vorlagenträger 9 ebenfalls einen beweglichen Spiegel 13. Jedoch ruht in diesem Falle, wenn das Verlängerungsstück 20 nicht eingebaut ist, die Vorlage 15, wie in Fig. 4 gezeigt ist, auf einem erhabenen, aber entfernbaren Vorlagentisch 45 mit einer Öffnung 11a. Wird dieser Tisch 45 entfernt, so wird der Abstand u entsprechend verringert. Die Vorlage ruht dann über der Vorlagenträgeröffnung 11. Die Verwendung des Vergrößerungsgeräts nach Figuren 4 und 5 ist die gleiche wie die anhand der Figuren 1 bis 3 beschriebene.

In den Figuren 6 bis 8 ist ein Vergrößerungsgerät gezeigt, in welchem das projizierte Bild durch eine rot gefärbte, schräg verlaufende Seitenwandplatte betrachtet wird. Das in den Figuren 6 bis 8 gezeigte Vergrößerungsgerät mit Vergrößerungslinse konstanter Brennweite umfaßt ein aus dunkelrot gefärbtem Polystyrol bestehendes Gehäuse 51. Auf dem Gehäuse 51 befindet sich ein entfernbarer Vorlagenträger 52, der an seinem unteren Ende eine daran in einem Linsenhalter 54 befestigte Vergrößerungslinse 53 trägt.

Auf dem Vorlagenträger 52 befindet sich ein Lampenhaus 55.
Auf dem Boden des Gehäuses 51 befindet sich ein das Bildprojektionsfeld umgrenzender Rahmen 56. In der einen Seite
des Gehäuses 51 befindet sich ein Paar mit Ärmeln versehener Armlöcher 57, von denen nur eines sichtbar ist.
Ein Teil 58 der Gehäusewandung ist geneigt, um zu gestatten, daß ein in den Rahmen 56 fokussiertes Bild für den
Benutzer außerhalb des Vergrößerungsgeräts sichtbar wird.

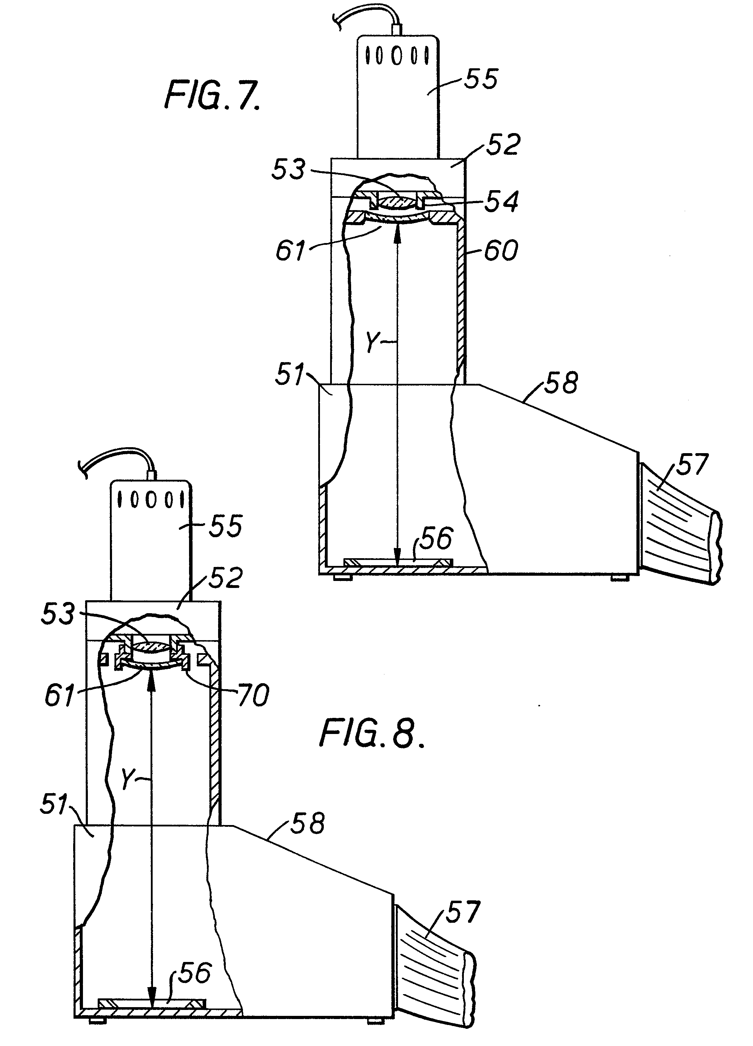

In der Fig. 7 ist ein Verlängerungsstück 60 zu sehen, welches in die gleiche Nut am äußeren Ende 51 paßt, in die
der Vorlagenträger 52 in Fig. 6 eingesetzt ist. Auf dem
Verlängerungsstück 60 sitzt in Fig. 7 der Vorlagenträger
52. In das Verlängerungsstück 60 ist eine Zerstreuungslinse 61 eingebaut, die sich innerhalb einer Entfernung
von 1 cm von der Vergrößerungslinse 53 befindet. Der Abstand zwischen der Vergrößerungslinse 53 und dem Bildprojektionsfeldrahmen 56 in Fig. 6 ist mit X bezeichnet, und
der Abstand zwischen der Zerstreuungslinse 61 und dem Rahmen 56 in Fig. 7 mit Y.

Ein Vergrößerungsgerät der in Figuren 6 und 7 gezeigten
Ausführungsform kann z.B. für die Einbringung von 35 mm-
Negativen in den Vorlagenträger und für die Projektion
des gesamten Bildfeldes dieses Negativs (3,0 cm x 2,0 cm)
auf ein Projektionsfeld von 12 cm x 8 cm (Standardgröße)
innerhalb des Bildfeldrahmens 56 ausgelegt werden. Dies
erfordert, daß der Abstand X eine Länge von 25 cm hat. Die
Brennweite F der Vergrößerungslinse 53 beträgt dann 5 cm.
Der Abstand u zwischen der Vergrößerungslinse 53 und der
Vorlage beträgt 6,25 cm.

Ein Verlängerungsstück 60 wurde nun so ausgelegt, daß es
einen 1,5 cm langen und 1 cm breiten Teilbereich des Negativs auf das Bildprojektionsfeld im Rahmen 56 projizierte,
und so eine Kopie von gleicher Größe, d.h. 12 cm x 8 cm
hergestellt wurde. Hierzu mußte aber der Abstand Y die
Länge von 50 cm aufweisen und eine Zerstreuungslinse 61

0098807

- 14 -

von -2,0 Dioptrin verwendet werden. Der Abstand u blieb
unverändert. Es wurde gefunden, daß die Belichtungszeit
bei Verwendung des Verlängerungsstücks 60 zur Herstellung
einer Kopie gleicher Dichte bei Verwendung des gleichen
Negativs viermal so lang sein mußte wie die Belichtungszeit, die erforderlich war, wenn kein Verlängerungsstück
benutzt wurde. Deshalb wurde auf dem Verlängerungsstück 60
der Vermerk "Belichtung x 4" angebracht.

Bei der Verwendung des Geräts nach Figuren 6 und 7 befindet
sich im Gehäuse 51 eine lichtdichte Kassette (nicht gezeigt), die lichtdichtes Papier der Größe 12,5 cm x 8,5 cm
enthält, sowie ein lichtdicht verschließbarer Behälter für
belichtetes Papier, welches dann außerhalb des Vergrößerungsgeräts weiterbehandelt werden kann.

Bei der Benutzung des Vergrößerungsgeräts nach Figuren 6
und 7 wird nun eine Packung Papiermaterial in das Gehäuse
51 eingebracht und der Vorlagenhalter 52 zusammen mit dem
auf ihm befindlichen Lampenhaus 55 direkt auf das Gehäuse
51 aufgesetzt.

Ein photographisches 35 mm-Negativ oder (noch häufiger)
ein Stück belichteter 35 mm-belichteter Film wird auf den
Träger 52 gelegt und die Lampe eingeschaltet, um das Bild
auf das Feld im Rahmen 56 zu fokussieren. Die richtige
Position des Negativs kann durch die Wandplatte 58 beobachtet werden. Sobald das Negativ in die gewünschte Stellung gebracht ist, wird die Lampe ausgeschaltet und ein
Bogen Kopiermaterial durch den Benutzer unter Verwendung
der Armlöcher 57 in den Rahmen 56 eingelegt. Die Kopie
wird dann belichtet und das belichtete Kopiermaterial in
den lichtdichten Behälter getan. Das Kopiermaterial wird
dann entwickelt, und es kann oft vorkommen, daß eine oder
zwei Belichtungen erforderlich sind, um eine Kopie zu erhalten, welche während der richtigen Zeitdauer belichtet
wurde.

- 15 -

Wenn die Vorlage irgendeinen Bildbereich enthält, von welchem eine weitere Vergrößerung erwünscht erscheint, so werden das Lampenhaus 55 und der Vorlagenträger 52 vom Gehäuse 51 abgenommen und das Verlängerungsstück 60 aufgesetzt, wobei die Zerstreuungslinse 61 sicht dicht unter der Vergrößerungslinse 53 befindet. Der Vorlagenhalter 52 wird dann auf das Verlängerungsstück 60, und auf den Vorlagenhalter seinerseits das Lampenhaus 55 aufgesetzt. Die Lampe wird dann eingeschaltet und die Vorlage unter der Lampe verschoben, bis der gewünschte Teilbereich im Rahmen 56 fokussiert ist, wobei dies durch das Wandstück 58 beobachtet werden kann. Die Lampe wird dann ausgeschaltet und ein neuer Bogen Kopiermaterial in den Rahmen 56 eingelegt. Die Kopie wird dann viermal so lang belichtet, wie dies bei der Herstellung der korrekt belichteten Kopie der gleichen Vorlage ohne Verwendung des Verlängerungsstücks 60 geschehen war.

Die belichtete Kopie wird dann entwickelt und eine achtfache Vergrößerung des gewünschten Teilbereichs der Vorlage erhalten.

Um Vergrößerungen verschiedenen Grades zu erhalten, können Verlängerungsstücke verschiedener Länge mit verschiedenen Zerstreuungslinsen vorgesehen sein. Werden Masken verwendet, so ist für jedes Verlängerungsstück eine besondere Maske erforderlich.

Um jedoch zu erreichen, daß sich die Zerstreuungslinse so nahe wie möglich an der Vergrößerungslinse befindet, kann es von Vorteil sein, eine entfernbare Zerstreuungslinse vorzusehen, die unter die Vergrößerungslinse im Vorlagenhalter eingepaßt werden kann.

Daher ist im Vergrößerungsgerät nach Fig. 8, welches im übrigen dem in Fig. 7 gezeigten gleich ist, die Zerstreuungslinse 61 in einen abnehmbaren Linsenhalter 70 enthalten, der von unten auf die Halterung 54 der Vergrößerungs-

0098807

- 16 -

linse 53 aufgeschoben werden kann, also nicht im Verlängerungsstück 60 befestigt ist.

Die Verwendung des Vergrößerungsgerät nach Fig. 8 ist die
gleiche wie die in Bezug auf Fig. 7 beschriebene.

Patentansprüche.

1. Vergrößerungsgerät mit einer das Bildprojektionsfeld
(2,56) umschließenden Umhüllung, insbesondere einem Gehäuse (1,6; 51) und einem darauf befindlichen, abnehmbaren
Vorlagenträger (9,52) mit einer Lichtdurchlaßöffnung (11)
und einem eine Vergrößerungslinse (30,53) von konstanter
Brennweite enthaltenden optischen Vergrößerungssystem
unterhalb der Lichtdurchlaßöffnung (11) in zur Bilderzeugung erforderlichem Abstand, d a d u r c h   g e k e n n -
z e i c h n e t, daß ein zwischen dem oberen Teil (6) der
Umhüllung und dem Vorlagenträger (9,52) einschiebbares Verlängerungsorgan (20,60) vorgesehen ist, das in im Vergrößerungsgerät eingeschobener Stellung den Abstand zwischen der
Bildprojektionsebene (2,56) und der Vergrößerungslinse (30,
53) um einen bestimmten Betrag vergrößert, und daß eine
Verstelleinrichtung (61; 36,40; 45) vorgesehen ist,
welche entweder (61) die Brennweite des Vergrößerungssystems zu vergrössern oder (36,40; 45) den Abstand der
Vergrößerungslinse (30,53) von der Lichtdurchlaßöffnung (11)
zu verringern geeignet ist, wobei in jedem der beiden Fälle
bei eingeschobenem Verlängerungsorgan (20,60) ein bestimmter Vorlagenteilbereich auf das Bildprojektionsfeld (2,56)
fokussiert werden kann, so daß das vom Vorlagenteilbereich
erzeugte Bild die gleiche Größe wie das ohne zwischengeschobenes Verlängerungsorgan (20,60) von der gesamten Vorlage erzeugte aufweist.

2. Vergrößerungsgerät nach Anspruch 1, dadurch gekennzeichnet, daß die Vergrößerungslinse (30) in einer senkrecht im Vorlagenträger (9) verschiebbaren Querwand (36)
gelagert ist, die vorzugsweise mittels Federn (40) in ihre
unterste Endstellung im Vorlagenträger (9) belastet ist,
und daß das Verlängerungsorgan (20) so ausgebildet ist,daß
es in in das Vergrößerungsgerät eingesetzter Stellung
die Querwand (36) mit der darin befindlichen Vergröße-

- 18 -

rungslinse (30) anhebt und hierdurch den Abstand der letzteren von der Lichtdurchlaßöffnung (11) verringert.

3. Photographisches Vergrößerungsgerät nach Anspruch 2, dedurch gekennzeichnet, daß das Verlängerungsorgan eine Anzahl Verlängerungsstücke verschiedener Länge umfaßt, welche die Querwand (36) mit der Vergrößerungslinse (30) auf verschiedene Niveaus anheben und so ermöglichen, daß Vergrößerungen verschiedener Größen erhalten werden.

4. Vergrößerungsgerät nach Anspruch 1, dadurch gekennzeichnet, daß ein entfernbarer erhöhter Trägeraufsatz (45) auf den Vorlagenträger (6) aufgesetzt ist während sich kein Verlängerungsorgan (20) im Vergrößerungsgerät eingeschoben befindet, aber daß der Trägeraufsatz (45) entfernt wird, um den Abstand zwischen der Vergrößerungslinse (30) und der eigentlichen Vorlagenöffnung (11) um einen bestimmten Betrag zu verringern, wenn das Verlängerungsstück (20) sich in Position im Vergrößerungsgerät befindet.

5. Vergrößerungsgerät nach Anspruch 4, dadurch gekennzeichnet, daß eine Anzahl Trägeraufsätze (45) verschiedener Höhe und eine Anzahl Verlängerungsstücke (20) vorgesehen sind, durch deren wahlweisen Einsatz und/oder wahlweise Kombination vergrößerte Bilder verschiedener Größe von ein und derselben Vorlage erhalten werden können.

6. Vergrößerungsgerät nach Anspruch 1, dadurch gekennzeichnet, daß das optische Vergrößerungssystem eine Zerstreuungslinse (61) umfaßt, die in enger Berührung mit der Vergrößerungslinse (30) in den Strahlengang eingeschoben wird und hierdurch die Brennweite des Vergrößerungssystems beim Einfügen eines Verlängerungsorgans (20) zwischen den Vorlagenträger (9) und das Umhüllungsoberteil (6) entsprechend einem gewünschten Grade der Vergrößerung angepaßt werden kann.

7. Vergrößerungsgerät nach Anspruch 6, dadurch gekennzeichnet, daß die Zerstreuungslinse (61) in einer im Verlängerungsorgan (60) befestigten Querwand befestigt ist.

8. Vergrößerungsgerät nach Anspruch 6, dadurch gekennzeichnet, daß ein die Zerstreuungslinse (61) enthaltender Linsenhalter (70) an einer Halterung der Vergrößerungslinse (53) befestigt oder mit dieser Halterung einstückig ausgebildet ist.

9. Vergrößerungsgerät nach einem der Ansprüche 6 bis 8, dadurch gekennzeichnet, daß eine Anzahl Verlängerungsstücke (20) und eine entsprechende Anzahl Zerstreuungslinsen (61) vorgesehen sind, um Vergrößerungen verschiedener Größe herstellen zu können.

10. Vergrößerungsgerät nach einem der Ansprüche 1 bis 9, dadurch gekennzeichnet, daß für die Vorlage (15) eine Maske (28) vorgesehen ist, deren lichtdurchlässiges Feld (29) den zu vergrößernden Bereich der Vorlage umgrenzt.

FIG.1.

0098807

216

FIG. 2.

0098807

FIG. 4.

FIG.5.

FIG.6.

FIG.7.

FIG.8.

0098807

Europäisches
Patentamt

**EUROPÄISCHER RECHERCHENBERICHT**

Nummer der Anmeldung

EP 83 81 0300

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-C- 86 227 (L. GAUMONT)<br>* Seiten 1,2; Figuren 1-7 * | 1 | G 03 B 27/32 |
| A | US-A-1 808 274 (R.A. WEBSTER)<br>* Seite 1, Zeilen 85-101; Seiten 2,3; Figuren 1-3 * | 1 | |
| A | FR-A- 381 258 (J. LEPINETTE)<br>* Seiten 1,2; Figuren 1-6 * | 1,3 | |
| A | FR-A- 453 536 (P. BOUCHER)<br>* Seite 2, Zeilen 9-50; Figuren 1,2 * | 1 | |
| A | DE-A-2 847 187 (DURST AG.)<br>* Seite 6, Zeilen 14-31; Seiten 7-11; Figuren 1-4 * | 1 | **RECHERCHIERTE SACHGEBIETE (Int. Cl. 3)** |
| A | US-A-4 220 410 (D.L. BLOODGOOD)<br>* Spalten 3-7; Figuren 1-10 * | 1,3 | G 03 B 27/32<br>G 03 B 27/34<br>G 03 B 27/42<br>G 03 B 27/46<br>G 03 B 27/54 |
| A | DE-C- 586 131 (P. FRANKE)<br>* Seite 1, Zeilen 35-68; Seite 2, Spalte 1; Figuren 1-3 * | 1 | G 03 B 27/40 |
| A | DE-C- 824 597 (H. PORST)<br>* Seite 2, Zeilen 98-126; Seite 3, Zeilen 1-86; Figuren 1-3 * | 1 | |

--- -/-

Der vorliegende Recherchenbericht wurde für alle Patentansprüche erstellt.

| Recherchenort<br>DEN HAAG | Abschlußdatum der Recherche<br>18-10-1983 | Prüfer<br>BOEYKENS J.W. |
|---|---|---|

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

## Europäisches Patentamt

## EUROPÄISCHER RECHERCHENBERICHT

| EINSCHLÄGIGE DOKUMENTE | | | Seite 2 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) | |
| A | US-A-2 315 452 (G.N. PIFER)<br>* Seiten 2-5; Figuren 1,2 *<br><br>----- | 1 | | |
| | | | **RECHERCHIERTE SACHGEBIETE (Int. Cl. ³)** | |

Der vorliegende Recherchenbericht wurde für alle Patentansprüche erstellt.

| Recherchenort<br>DEN HAAG | Abschlußdatum der Recherche<br>18-10-1983 | Prüfer<br>BOEYKENS J.W. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82